# EUROPEAN PATENT APPLICATION

(11) **EP 4 814 698 A1**
(43) Date of publication of application: **30.09.2026**
(21) Application number: 26165001.4
(22) Date of filing: 16.03.2026
(51) Int. Cl.: G06F 8/65

(54) **ON DEMAND CUSTOM CONTAINERIZED BINARY HOTSWAPPER**

(30) Priority: 28.03.2025 US 202519093387
(71) Applicant: Google LLC, Mountain View, CA 94043 (US)
(72) Inventor: KHARBANDA, Alankrit, Mountain View, 94043 (US); CHAUHAN, Ankur, Mountain View, 94043 (US); DAYANAND, Sowmya, Mountain View, 94043 (US)
(74) Representative: Betten & Resch

(57) **Abstract**

Generally disclosed herein is an automatic software agent update approach for dynamically deploying and configuring a software agent within a container in a cloud environment. The approach may include an agent platform and a configuration management system. The agent platform may be configured to manage the deployment and configuration of the software agent. The agent platform may register the software agent, track the status of the software agent, and distribute the software updates for the software agent. The configuration management system may be configured to dynamically configure the software agent based on predefined rules or policies.

## Description

### BACKGROUND

Remote on-premises computing environments present significant challenges in maintaining and updating deployed binary files as compared to cloud environments. The challenges are due to inconsistent version tracking, application of inconsistent patches, and difficulties in tracking deployed versions of software agents across diverse customers' computing environments. The challenges may become more complicated by the feasibility of customizing binary updates for individual customers' on-premises containers since the customers typically deploy entire container images, making it difficult to enforce and maintain a specific version of a particular binary file. Therefore, a robust control of the software agent, automatic update mechanisms, centralized patch management, and clear communication with the customers are desired to ensure optimal operability of the customers' on-premises computing environments.

For example, when a customer's computing environment encounters an issue, a common troubleshooting step may involve setting up and deploying a custom software agent for the customer to isolate the issue. However, this workaround may require the customer to run a binary file directly by bypassing containerization, compliance checks, and/or security or privacy updates, which may involve cumbersome back-and-forth communication and troubleshooting processes.

The above approach may further involve additional problems. For example, a subject matter expert or a software developer must be engaged to produce a custom binary file. Such a custom binary file may include subtle bugs. The deployed software agent in the binary file may not be testable as compared to being tested in a predictable containerized environment. Thus, deploying the custom software agent in the form of a binary file may expose the binary file to unpredictable issues. Finally, after deploying the custom binary file, the customer needs to manually revert to the standard automatic update track. However, the customer may forget or be unwilling to revert to the standard automatic update track, potentially leaving the customer with an outdated version of the software agent.

### SUMMARY

Generally disclosed herein is an automatic software agent update approach for dynamically deploying and configuring a software agent within a container in a cloud environment. The approach may include an agent platform and a configuration management system. The agent platform may be configured to manage the deployment and configuration of the software agent. The agent platform may register the software agent, track the status of the software agent, and distribute the software updates for the software agent. The configuration management system may be configured to dynamically configure the software agent based on predefined rules or policies.

An aspect of the disclosure provides a system for updating a software agent based on containerization. The system may comprise one or more processors configured to generate a target change for the software agent stored in a container, test the target change for the software agent, generate an updated uniform resource locator (URL) for the software agent based on the target change, automatically download, for the software agent, an updated binary file to the container based on the updated URL, and replace a previous binary file with the updated binary file in the container.

In some examples, the one or more processors may be configured to determine a target user to send the software agent to at a predetermined interval of time.

In some examples, the one or more processors may be configured to register the software agent and monitor a status of the software agent.

In some examples, the one or more processors may be configured to dynamically configure the software agent based on predefined rules or policies.

In some examples, the predefined rule or policies may include information regarding a configuration of a user computing device, location information, and user identification information.

In some examples, the one or more processors may be configured to evaluate a configuration of the software agent before the software agent is deployed.

In some examples, the one or more processors may be configured to evaluate the configuration of the software agent based on a project and pool identifier of the software agent.

In some examples, the one or more processors may be configured to activate unique functionalities for a user based on a list of experiments performed for the user.

In some examples, the one or more processors may be configured to determine the updated URL for the user based on a per-project or a per-agent-pool basis and the list of the experiments performed for the user.

In some examples, the one or more processors may be configured to record metrics, logs, and customer feedback to determine whether particular issues for the user are fixed.

In some examples, the one or more processors may be configured to determine time to live (TTL) information, and wherein the updated URL is superseded by a superseding URL after the TTL.

Another aspect of the disclosure provides a method for updating a software agent based on containerization. The method may comprise generating, by one or more processors, a target change for the software agent stored in a container; testing, by the one or more processors, the target change for the software agent; generating, by the one or more processors, an updated uniform resource locator (URL) for the software agent based on the target change; automatically downloading, by the one or more processors, for the software agent, an updated binary file to the container based on the updated URL; and replacing, by the one or more processors, a previous binary file with the updated binary file in the container.

In some examples, the method may further comprise determining, by the one or more processors, a target user to send the software agent to at a predetermined interval of time.

In some examples, the method may further comprise registering, by the one or more processors, the software agent and monitoring a status of the software agent.

In some examples, the method may further comprise dynamically configuring, by the one or more processors, the software agent based on predefined rules or policies.

In some examples, the predefined rule or policies may include information regarding a configuration of a user computing device, location information, and user identification information.

In some examples, the method may further comprise evaluating, by the one or more processors, a configuration of the software agent before the software agent is deployed.

In some examples, the method may further comprise evaluating, by the one or more processors, the configuration of the software agent based on a project and pool identifier of the software agent.

In some examples, the method may further comprise activating, by the one or more processors, unique functionalities for a user based on a list of experiments performed for the user.

Yet another aspect of the disclosure provides a non-transitory computer-readable medium comprising instructions that, when executed by one or more processors, cause the one or more processors to perform operations for updating a software agent based on containerization. The operations may comprise generating a target change for the software agent stored in a container, testing the target change for the software agent, generating an updated uniform resource locator (URL) for the software agent based on the target change, automatically downloading, for the software agent, an updated binary file to the container based on the updated URL, and replacing a previous binary file with the updated binary file in the container.

### BRIEF DESCRIPTION OF THE DRAWINGS

FIG. 1 is a schematic representation of an example system for an automatic software update using a remote containerized deployment in accordance with aspects of the disclosure.
FIG. 2 is an example automatic software update controller in accordance with aspects of the disclosure.
FIG. 3 is an example automatic software update system in accordance with aspects of the disclosure.
FIG. 4 is an example sequence diagram of an automatic software update process in accordance with aspects of the disclosure.
FIG. 5 is an example flow diagram of an automatic software update process in accordance with aspects of the disclosure.

### DETAILED DESCRIPTION

The present disclosure relates to an approach for automatically updating a software agent using a container in a distributed computing environment. The approach may include generating a target change for the software agent within the container and testing the target change for the software agent. The approach may include automatically updating a uniform resource locator (URL) for the software agent to download an updated binary file containing a software patch. The approach may include changing the configuration of the container in which the software is stored. The approach may include automatically replacing a previous version of the binary file with the updated binary file in the container.

The approach may include a software agent platform and a software agent configuration management system. The agent platform may include a backend system responsible for monitoring the software agent's status information. The agent platform may be configured to receive the software agent's status information and determine a URL for which the software agent is to run. The configuration management system may be configured to control or change an auto-update URL such that the software agent can be updated with a custom binary tailored to a particular agent project or agent.

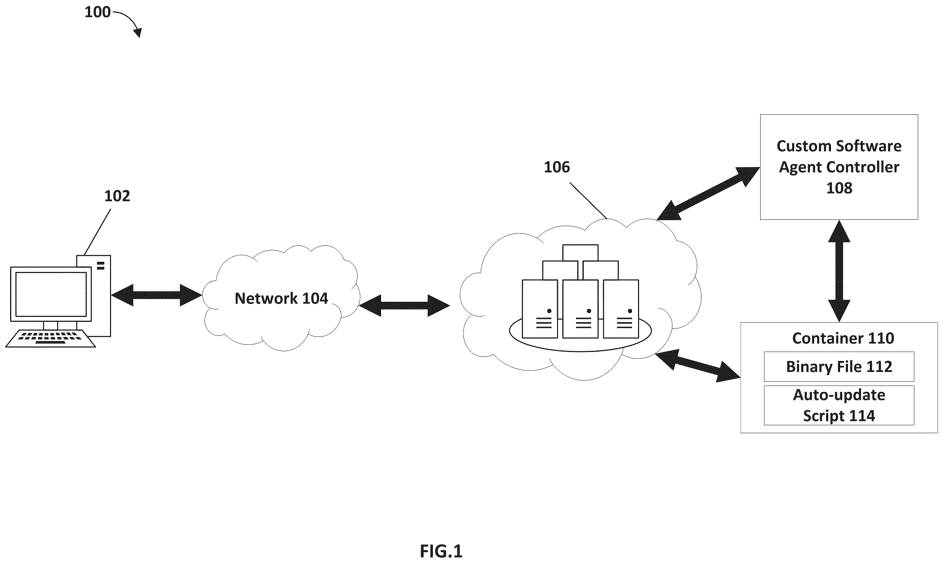

FIG. 1 is a schematic representation of an example system 100 for an automatic software update using a remote containerized deployment. The system 100 may include a client device 102 and cloud environment 106. Client device 102 may be connected to cloud environment 106 via network 104. Cloud environment 106 may include one or more computers or a distributed system including one or more data processing hardware and/or storage devices. Custom software agent controller 108 and container 110 may be located in the infrastructure (e.g., data processing hardware and/or memory hardware) of cloud environment 106. Cloud environment 106 may be configured to transmit container 110 to client device 102 via network 104. Cloud environment 106 may be configured to configure or update container 110. Container 110 may include binary file 112 and auto-update script 114.

User device 102 may include any computing device such as a computer, a tablet, a laptop, etc. If user device 102 encounters a problem while running a computer program or an application programming interface (API), user device 102 may request a download of a software agent from cloud environment 106. Instead of downloading a binary file for the desired software agent, cloud environment 106 may configure and deploy container 110 to user device 102. Software agent included in container 110 may be downloaded onto user device 102 as a binary file 112. The software agent may refer to a computer program that may act on behalf of a user of another program, capable of performing tasks with a certain degree of autonomy. If an update is needed for the software agent or an additional feature is required to fix the user's current problem, auto-update script 114 may search for an updated software patch for the software agent stored in any storage devices included in cloud environment 106.

Cloud environment 106 may be configured to update or configure container 110 using custom software agent controller 108. Custom software agent controller 108 may include several components to monitor and automatically binary file 112 as described in more detail below.

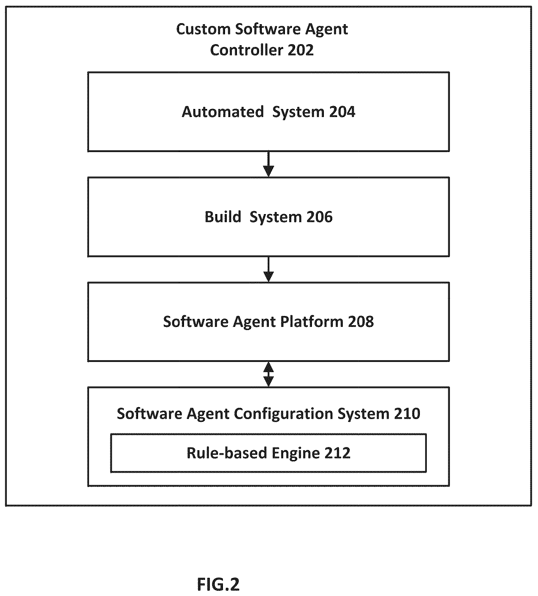

FIG. 2 is a block diagram illustrating a custom software agent controller 202. Custom software agent controller 202 may correspond to custom software agent controller 108 as depicted in FIG. 1. Custom software agent controller 202 can take on a variety of configurations, such as, for example, a controller or microcontroller, or a processor, such as a CPU, a GPU, or an ASIC, including a tensor processing unit (TPU). Custom software agent controller 202 may be configured to manage the deployment and configuration of the software agent. Custom software agent controller 202 may also be configured to register the software agent, track the status of the software agent, and distribute software updates for the software agent. Custom software agent controller 202 may further be configured to dynamically configure the software agent based on predefined rules or policies. The predefined rules or polices may include information regarding a configuration of a user computing device, location information, and user identification information.

Custom software agent controller 202 may include components such as a processor, memory including data, and instructions to execute various modules. Custom software agent controller 202 may include other components present in server computing devices.

Custom software agent controller 202 may include automated system 204, build system 206, software agent platform 208, and software agent configuration system 210. Automated system 204 may be configured to write code based on a software developer's instructions. Automated system 204 may include artificial intelligence (AI)-based code writing assistance tools. Automated system 204 may write code using simple natural language prompts based on the software developer's instructions. For example, automated system 204 may be configured to write code for an update of a software agent for a particular customer when the customer reports a particular issue.

Build system 206 may be configured to convert the code written by the automated system 204 to executable binaries that can be read by computing devices. Build system 206 may include a set of tools and processes that may automate the compilation, linking, and packaging of source code into libraries or other software components. Build system 206 may produce the necessary software components necessary for building a container for specific purposes, such as monitoring and updating software for home appliances, electronic vehicles, personal computers, tablets, laptops, etc. Build system 206 may be configured to run tests on the binary file, and upload the binary file with an expiry time in a public storage/cloud environment

Software agent platform 208 may be configured to manage the deployment and configuration of the software agent. Software agent platform 208 may be configured to register the software agent, track the status of the software agent, and distribute the software updates for the software agent. Software agent platform 208 may be configured to receive the software agent's status information and determine a URL for which the software agent is to run. Software agent platform 208 may further be configured to determine a per-check-in basis for where to send the software agent. The per-check-in basis may refer to the process that the binary file within the container periodically checks with the software agent platform 208 to determine what version of the binary file it should be. Software agents may include two components: an auto-update script and a binary file. The binary file may be configured to periodically check what version it is supposed to be and record the version identifier (ID) or a URL into a breadcrumb file. Breadcrumb files may refer to files containing navigational aids that display a user's path through a website or application's hierarchy. The auto-update script may read the breadcrumb file. If the version of the binary file and the current version do not match, the auto-update script may update the binary file by updating the current URL with a new URL from which the software agent can download the updated binary file.

Software agent configuration system 210 may be configured to dynamically configure the software agent based on predefined rules or policies. The predefined rules or policies may include any attributes that may allow the system to segment customers into different cohorts. For example, software agent configuration system 210 may be configured to group each customer based on the customer's location and name. The policy may be set up to target other customers that share similar attributes. Software agent configuration system 210 may include a rule-based engine 212 that can evaluate the software agent's configurations before it is deployed. The rule-based engine 212 can be configured to evaluate the software agent's configuration based on a variety of categories, such as the software agent's project and pool identifier. Software agent configuration system 210 may be configured to control or change an auto-update URL such that the software agent can be updated with a custom binary tailored to a particular agent project or agent pool. Software agent configuration system 210 may be configured to deploy new features for the update of the binary file independent of the software agent and the binary file released by the agent platform. Software agent configuration system 210 may also be configured to activate certain functionality for a particular customer using the system's allowlist features. A responsible software developer can test the allowlist features for the customer before deployment. Software agent configuration system 210 may keep track of the list of the experiments that have been performed for each customer. Based on the experiments, software agent configuration system 210 may determine an updated URL for a specific software agent on a per-project or a per-agent-pool basis. The customer's container may be automatically updated to the latest custom binary. Software agent configuration system 210 may also be configured to record metrics, logs, and customer feedback to determine whether the issues have been fixed by the custom binary.

It is to be appreciated that in this example, automated system 204, build system 206, software agent platform 208, and software agent configuration system 210 are shown as part of custom software agent controller 202. In other examples, automated system 204, build system 206, software agent platform 208, and software agent configuration system 210 may be implemented in one or more other systems or computing devices.

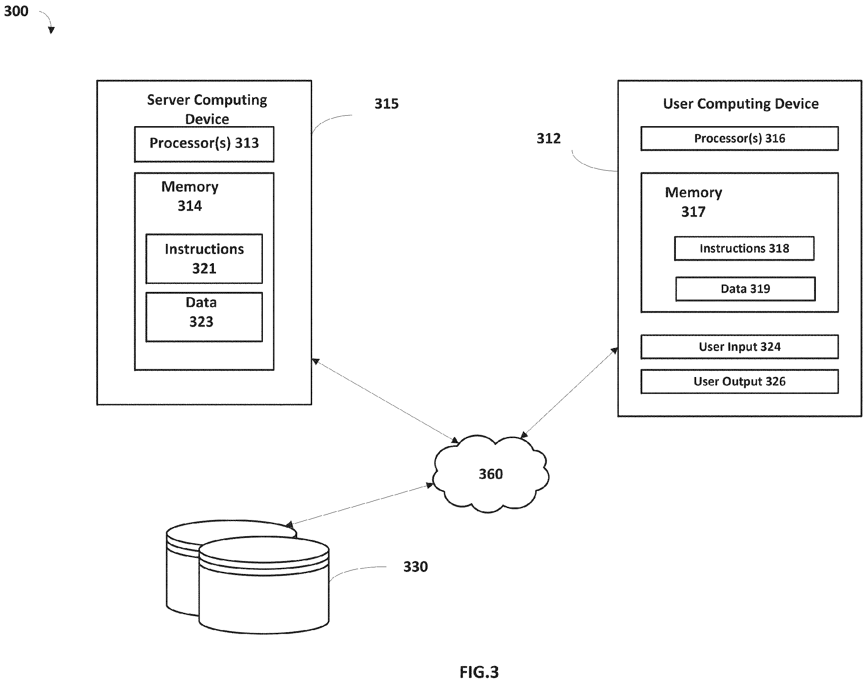

FIG. 3 depicts a block diagram illustrating example components of the automatic software update system. User computing device 312 may include a graphical user interface and software that displays the status of the software agent, or the status of the issues reported by a user. Server computing device 315 may be a component of custom software agent controller 202 illustrated in FIG.2. Server computing device 315 may be configured to manage the deployment and configuration of the software agent based on predefined rules or policies.

User computing device 312 and the server computing device 315 can be communicatively coupled to one or more storage devices 330 over a network 360. The storage device(s) 330 can be a combination of volatile and non-volatile memory and can be at the same or different physical locations than the computing devices 312, 315. For example, the storage device(s) 330 can include any type of non-transitory computer-readable medium capable of storing information, such as a hard drive, solid-state drive, tape drive, optical storage, memory card, ROM, RAM, DVD, CD-ROM, write-capable, and read-only memories.

The server computing device 315 can include one or more processors 313 and memory 314. Memory 314 can store information accessible by the processor(s) 313, including instructions 321 that can be executed by the processor(s) 313. Memory 314 can also include data 323 that can be retrieved, manipulated, or stored by the processor(s) 313. Memory 314 can be a type of non-transitory computer-readable medium capable of storing information accessible by the processor(s) 313, such as volatile and non-volatile memory. The processor(s) 313 can include one or more central processing units (CPUs), graphic processing units (GPUs), field-programmable gate arrays (FPGAs), and/or application-specific integrated circuits (ASICs), such as tensor processing units (TPUs).

Instructions 321 can include one or more instructions that when executed by the processor(s) 313, cause the one or more processors to perform actions defined by the instructions. Instructions 321 can be stored in object code format for direct processing by the processor(s) 313, or in other formats including interpretable scripts or collections of independent source code modules that are interpreted on demand or compiled in advance. Instructions 321 can include instructions for implementing processes consistent with aspects of this disclosure. Such processes can be executed using the processor(s) 313, and/or using other processors remotely located from the server computing device 315.

Data 323 can be retrieved, stored, or modified by the processor(s) 313 in accordance with instructions 321. Data 323 can be stored in computer registers, in a relational or non-relational database as a table having a plurality of different fields and records, or as JSON, YAML, proto, or XML documents. Data 323 can also be formatted in a computer-readable format such as, but not limited to, binary values, ASCII, or Unicode. Moreover, data 323 can include information sufficient to identify relevant information, such as numbers, descriptive text, proprietary codes, pointers, references to data stored in other memories, including other network locations, or information that is used by a function to calculate relevant data.

User computing device 312 can also be configured similar to the server computing device 315, with one or more processors 316, memory 317, instructions 318, and data 319. The user computing device 312 can also include a user output 326, and a user input 324. The user input 324 can include any appropriate mechanism or technique for receiving input from a user, such as a keyboard, mouse, mechanical actuators, soft actuators, touchscreens, microphones, and sensors.

Server computing device 315 can be configured to transmit data to the user computing device 312, and the user computing device 312 can be configured to display at least a portion of the received data on a display implemented as part of the user output 326. The user output 326 can also be used for displaying an interface between the user computing device 312 and the server computing device 315. The user output 326 can alternatively or additionally include one or more speakers, transducers, or other audio outputs, a haptic interface, or other tactile feedback that provides non-visual and non-audible information to the platform user of the user computing device 312.

Although FIG. 3 illustrates the processors 313, 316 and the memories 314, 317 as being within the computing devices 315, 312, components described in this specification, including the processors 313, 316 and the memories 314, 317 can include multiple processors and memories that can operate in different physical locations and not within the same computing device. For example, some of the instructions 321, 318 and the data 323, 319 can be stored on a removable SD card and others within a read-only computer chip. Some or all of the instructions and data can be stored in a location physically remote from, yet still accessible by, the processors 313, 316. Similarly, processors 313, 316 can include a collection of processors that can perform concurrent and/or sequential operations. Computing devices 315, 312 can each include one or more internal clocks providing timing information, which can be used for time measurement for operations and programs run by computing devices 315, 312.

The server computing device 315 can be configured to receive requests to process data from the user computing device 312. For example, environment 300 can be part of a computing platform configured to provide a variety of services to users, through various user interfaces and/or APIs exposing the platform services. One or more services may include automatically generating updates for software agents in a containerized environment.

Computing devices 312, 315 can be capable of direct and indirect communication over network 360. Computing devices 312, 315 can set up listening sockets that may accept an initiating connection for sending and receiving information. The network 360 itself can include various configurations and protocols including the Internet, World Wide Web, intranets, virtual private networks, wide area networks, local networks, and private networks using communication protocols proprietary to one or more companies. Network 360 can support a variety of short- and long-range connections. The network 360, in addition, or alternatively, can also support wired connections between computing devices 312, 315, including over various types of Ethernet connection.

Although a single server computing device 315 and user computing device 312 are shown in FIG. 3, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

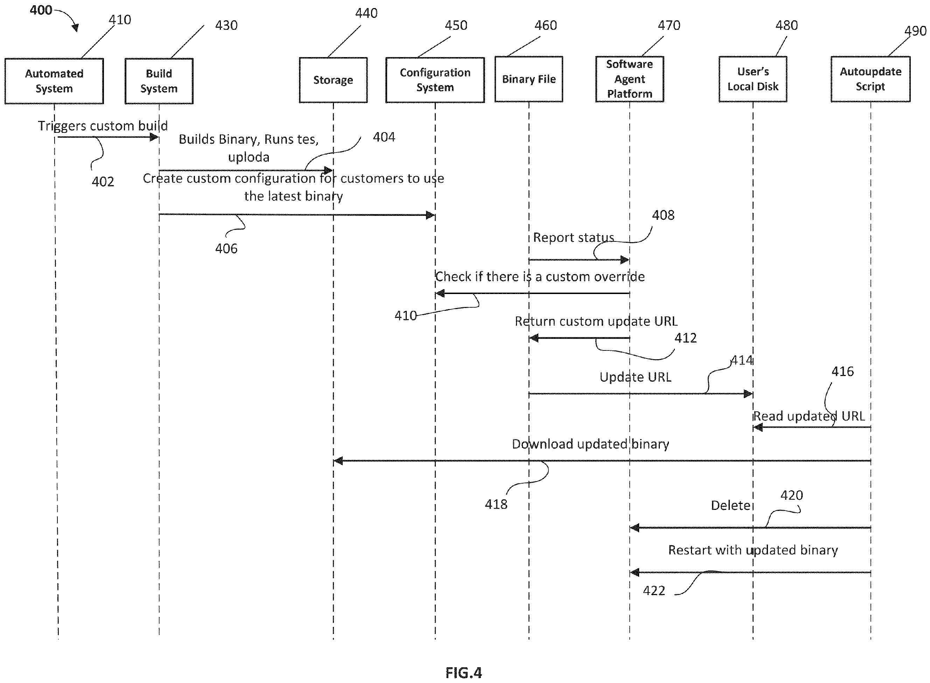

FIG. 4 illustrates an example sequence diagram for an automatic software update process 400. At step 402, the software developer triggers a custom build when an issue is reported to the software developer using automated system 410. Automated system 410 may correspond to automated system 204 as depicted in FIG. 2. The software developer may instruct the automated system to generate code based on a target change. The target change may refer to a specific change or update needed for a particular customer or a group of customers experiencing similar software issues.

At step 404, build system 430 may be configured to build a new binary file, run tests on the binary file, and upload the binary file with an expiry time in a public storage/cloud environment. Build system 430 may correspond to build system 206 as depicted in FIG. 2. Build system 430 can be configured to ascertain that an end-to-end (E2E) test is completed before proceeding to the next step. Build system 430 may also be configured to generate a change list for configuration system 450, removing any manual processes performed by the software developer. Change lists may refer to necessary code changes needed to accommodate the target change. Configuration system 450 may be equivalent to software agent configuration system 210 as depicted in FIG. 2.

At step 406, build system 430 may be configured to generate a custom configuration for a particular customer to use the new binary file stored in the storage. The new binary file may include an expiry time and after a predefined expiry time, the new binary file may automatically be deleted.

At step 408, the old binary file of the software agent contained in the container may be configured to transmit the status information to software agent platform 470. The old binary file may be configured to periodically make a hypertext transfer protocol (HTTP) call to software agent platform 470. The HTTP call may request metadata such as software agent ID, project ID, etc.

At step 410, software agent platform 470 may be configured to determine if there is an update on the old binary file. Software agent platform 470 may correspond to software agent platform 208 as depicted in FIG.2. Software agent platform 470 may compare the current version of the binary file with version information that software agent platform 470 may have received to check a discrepancy. In some examples, software agent platform 470 may be configured to receive the current version information from the configuration system 450.

At step 412, when software agent platform 470 receives a confirmation from the configuration system 450 that there has been an update on the old binary file, software agent platform 470 may be configured to transmit a custom update URL that the software agent previously used to override the old binary file inside the container. The custom URL may be sent to a particular customer while a problem that the customer may be having can be fixed. In some examples, a custom URL may be sent to a particular customer when a software developer attempts to test a new feature only for the particular customer. Alternatively, configuration system 450 may have explicit time to live (TTL) information, allowing for an old custom URL to be updated by a newer URL after predefined days.

At step 414, the old URL is updated with an updated URL by the old binary inside the container. The updated URL is transmitted as a text file to be saved on the local disk of a computing device of the customer such as user computing device 312.

At step 416, the auto-update script inside the customer's container in the cloud may be triggered to read the updated URL. Each customer may download a container containing the software agent. The software agent may include binary files and auto-update scripts. The auto-update script may be configured to read an updated URL when such a URL is available via software agent platform 470.

At step 418, the auto-update script may trigger the container to download the updated binary file from the public storage using the updated URL. In some examples, software agent platform 470 may just change the content linked to the URL without changing the address. For example, software agent platform 470 may be configured to continue to use the same HTTP address for the auto-update script to download the updated binary file.

At step 420, the auto-update script sends a "delete" command to the container such that the old binary file is deleted. In some examples, software agent platform 470 may be configured to flag the old binary file to be deleted after a predefined expiry time.

At step 422, the auto-update script commands to replace the old binary file with the updated binary file in the container. Software agent platform 470 may be configured to determine when to delete the old binary file permanently. In some examples, software agent platform 470 may be configured to block downloading the old binary file without deleting the old binary file from the storage for the predefined expiry time.

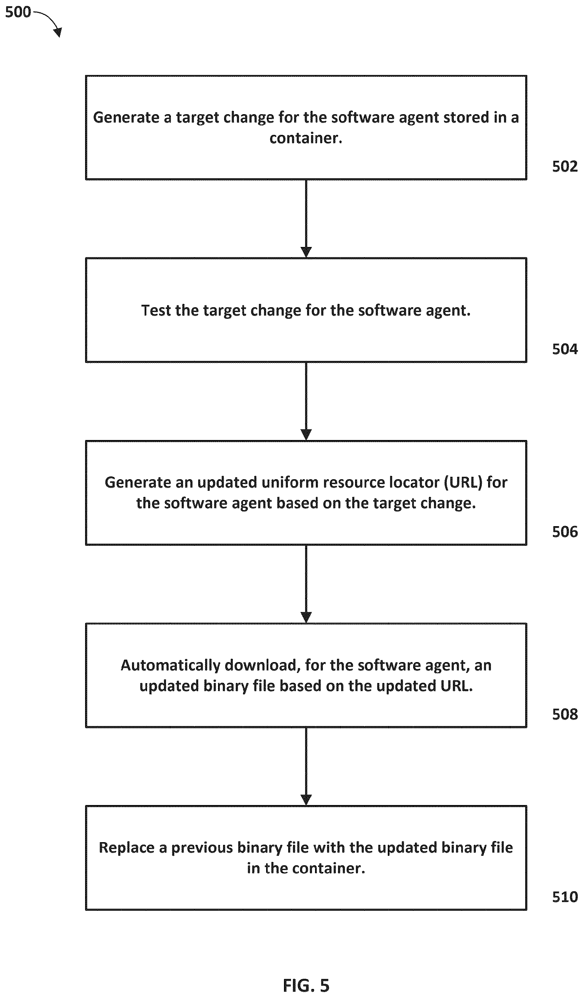

FIG. 5 illustrates an example flow diagram of an automatic software update process 500. According to block 502, a controller such as custom software agent controller 202 may be configured to generate a target change for the software agent stored in a container. When a customer reports a certain software issue to a backend server, a software developer reads the report and determines a target change needed to fix the software issue.

According to block 504, the controller may be configured to test the target change for the software agent. The software developer may utilize an automated system to build the necessary code to build an updated software patch. The controller may be configured to use a known build system to automatically test the updated software patch and determine whether the issue is fixed using the updated software.

According to block 506, the controller may be configured to generate an updated uniform resource locator (URL) for the software agent based on the target change. The customer may download the container containing a particular software agent. The software agent may include a binary file and an auto-update script. The binary file may include a file that periodically checks what version of a particular software patch the software agent is to be using. The binary file may leave a breadcrumb file that includes traces of a version ID or a previously used URL. The auto-update script may be configured to read the breadcrumb file and determine if the software agent needs any updates.

According to block 508, the controller may be configured to automatically download, for the software agent, an updated binary file based on the updated URL. The updated binary file may include the software patch that is targeted to fix the issue for the customer.

According to block 510, the controller may be configured to replace a previous binary file with the updated binary file in the container. Once the software agent downloaded the software patch, the controller may be configured to update the binary file to record the version ID of the updated software patch and the updated URL used for downloading the software patch.

The automatic software update process described herein is beneficial at least in that it provides a robust control of the software agent, automatic update mechanisms, centralized patch management, and clear communication with the customers. Since a user does not need to individually download and run a binary file directly by bypassing containerization, the method described herein may avoid cumbersome back-and-forth communication and troubleshooting processes between the user and a software developer.

In this specification, the phrase "configured to" is used in different contexts related to computer systems, hardware, or part of a computer program, engine, or module. When a system is said to be configured to perform one or more operations, this means that the system has appropriate software, firmware, and/or hardware installed on the system that, when in operation, causes the system to perform the one or more operations. When some hardware is said to be configured to perform one or more operations, this means that the hardware includes one or more circuits that, when in operation, receive input and generate output according to the input and corresponding to the one or more operations. When a computer program, engine, or module is said to be configured to perform one or more operations, this means that the computer program includes one or more program instructions, that when executed by one or more computers, causes the one or more computers to perform the one or more operations.

Although the technology herein has been described with reference to particular examples, it is to be understood that these examples are merely illustrative of the principles and applications of the present technology. It is therefore to be understood that numerous modifications may be made and that other arrangements may be devised without departing from the spirit and scope of the present technology as defined by the appended claims.

Unless otherwise stated, the foregoing alternative examples are not mutually exclusive but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A system for updating a software agent based on containerization, the system
comprising:
one or more processors configured to:
generate a target change for the software agent stored in a container;
test the target change for the software agent;
generate an updated uniform resource locator, URL, for the software agent based on the target change;
automatically download, for the software agent, an updated binary file to the container based on the updated URL; and
replace a previous binary file with the updated binary file in the container.

2. The system of claim 1, wherein the one or more processors are configured to determine a target user to send the software agent to at a predetermined interval of time.

3. The system of claim 1 or 2, wherein the one or more processors are configured to register the software agent and monitor a status of the software agent.

4. The system of one of claims 1 to 3,
wherein the one or more processors are configured to dynamically configure the software agent based on predefined rules or policies,
wherein, optionally, the predefined rule or policies include information regarding a configuration of a user computing device, location information, and user identification information.

5. The system of one of claims 1 to 4,
wherein the one or more processors are configured to evaluate a configuration of the software agent before the software agent is deployed,
wherein, optionally, the one or more processors are configured to evaluate the configuration of the software agent based on a project and pool identifier of the software agent.

6. The system of one of claims 1 to 5,
wherein the one or more processors are configured to activate unique functionalities for a user based on a list of experiments performed for the user.

7. The system of claim 6, wherein the one or more processors are configured to determine the updated URL for the user based on a per-project or a per-agent-pool basis and the list of the experiments performed for the user.

8. The system of claim 7,
wherein the one or more processors are configured to record metrics, logs, and customer feedback to determine whether particular issues for the user are fixed;
wherein, optionally, the one or more processors are configured to determine time to live, TTL, information, and wherein the updated URL is superseded by a superseding URL after the TTL.

9. A method for updating a software agent based on containerization, the method comprising:
generating, by one or more processors, a target change for the software agent stored in a container;
testing, by the one or more processors, the target change for the software agent;
generating, by the one or more processors, an updated uniform resource locator, URL, for the software agent based on the target change;
automatically downloading, by the one or more processors, for the software agent, an updated binary file to the container based on the updated URL; and
replacing, by the one or more processors, a previous binary file with the updated binary file in the container.

10. The method of claim 9, further comprising determining, by the one or more processors, a target user to send the software agent to at a predetermined interval of time.

11. The method of claim 9 or 10, further comprising registering, by the one or more processors, the software agent and monitoring a status of the software agent.

12. The method of one of claims 9 to 11, further comprising dynamically configuring, by the one or more processors, the software agent based on predefined rules or policies;
wherein, optionally, the predefined rule or policies include information regarding a configuration of a user computing device, location information, and user identification information.

13. The method of one of claims 9 to 12,
further comprising evaluating, by the one or more processors, a configuration of the software agent before the software agent is deployed; and
optionally further comprising evaluating, by the one or more processors, the configuration of the software agent based on a project and pool identifier of the software agent.

14. The method of one of claims 9 to 13, further comprising activating, by the one or more processors, unique functionalities for a user based on a list of experiments performed for the user.

15. A non-transitory computer-readable medium comprising instructions that, when executed by one or more processors, cause the one or more processors to perform operations for updating a software agent based on containerization, the operations comprising:
generating a target change for the software agent stored in a container;
testing the target change for the software agent;
generating an updated uniform resource locator, URL, for the software agent based on the target change;
automatically downloading, for the software agent, an updated binary file to the container based on the updated URL; and
replacing a previous binary file with the updated binary file in the container.

16. A computer program comprising instructions which, when the program is executed by a computer, cause the computer to carry out the method of one of claims 9 to 14.
